# EUROPÄISCHE PATENTANMELDUNG

(11) **EP 0 571 846 A1**
(43) Veröffentlichungstag der Anmeldung: **01.12.1993**
(21) Anmeldenummer: 93107921.4
(22) Anmeldetag: 14.05.1993
(51) Int. Cl.: A01N 47/12, B27K 3/50

(54) **Mittel zum Schutz von Schnittholz**

(30) Priorität: 27.05.1992 DE 4217523
(71) Anmelder: BAYER AG, 51368 Leverkusen (DE)
(72) Erfinder: Schmitt, Hans-Georg, Dr., W-4150 Krefeld (DE); Exner, Otto, Dr., W-4030 Ratingen (DE); Buschhaus, Hans-Ulrich, Dr., W-4150 Krefeld (DE)

(57) **Zusammenfassung**

Die vorliegende Erfindung betrifft ein Mittel oder Konzentrat zum Schutz von Schnittholz gegen holzverfärbende Pilze enthaltend ein Fungizid auf Phenol-Basis und ein Fungizid auf Organo-iod-Basis, gegebenenfalls wieteren Fungiziden und Insektiziden, gelöst in einem organisch-chemischen Lösemittel oder Lösemittelgemisch oder in einem Gemisch aus Wasser und einem organisch-chemischen Lösemittel oder Lösemittelgemisch und mindestens einem Emulgator.

## Beschreibung

Die vorliegende Erfindung betrifft ein Mittel oder Konzentrat zum Schutz von Schnittholz gegen holzverfärbende Pilze.

Frisch gesägtes Schnittholz wird im feuchten Zustand häufig von holzverfärbenden Pilzen (Bläuepilzen) und Schimmelpilzen befallen, wodurch eine Wertminderung des Holzes hervorgerufen wird. Daher ist es nötig, eine Schutzbehandlung durchzuführen.

Es ist bekannt, daß Iodpropargyl-Derivate, wie z.B. das 3-Iod-2-propinyl-n-butylcarbamat (IPBC), für den Einsatz im Holzschutz im Prinzip geeignet sind (vgl. DE-OS 2 433 410). Diese Verbindungen sind wirksam gegen Bläuepilze, jedoch in der Einzelanwendung gegen das breite Spektrum der natürlich vorkommenden holzverfärbenden Pilze und Schimmelpilze unbefriedigend, da ihr Wirkungsspektrum lückenhaft ist.

Weiterhin ist bekannt, daß Mischungen aus IPBC und Didecyldimethylammoniumchlorid zum Schutz gegen holzzerstörende, vor allem Braunfäule- und Weißfäulepilze, und holzverfärbende Pilze und gegen Termiten einsetzbar sind (vgl. AU 8656-411). Auch Schimmelpilze und Mehltau können damit bekämpft werden, Allerdings schränkt die relativ hohe Korrosivität von Didecyldimethylammoniumchlorid-Derivaten die Einsetzbarkeit solcher Formulierungen in unbehandelten metallischen, insbesondere eisernen Behandlungsbecken ein. Außerdem neigen Formulierungen dieser Art aufgrund der Oberflächenaktivität von quarternären Ammoniumsalzen zum Schäumen, so daß ein Zusatz von Entschäumern notwendig werden kann.

Weiterhin ist bekannt, daß phenolische Wirkstoffe wie z.B. Pentachlorphenol bzw. deren Alkalisalze zum Schutz von Schnittholz gegen holzverfärbende Pilze eingesetzt werden können; allerdings ist die Anwendung speziell von Pentachlorphenol bzw. seiner Alkalisalze wegen toxikologischer und ökotoxikologischer Eigenschaften dieser Verbindungen von Nachteil.

Weiterhin ist die Verwendbarkeit von halogenfreien Phenolderivaten, wie z.B. ortho-Phenylphenol bzw. deren Alkalisalze zum Schutz von Schnittholz gegen Pilzbefall bekannt. Zwar ist die Verwendung dieser Verbindungen aus toxikologischer und ökotoxikologischer Sicht unbedenklich, jedoch sind sie in der Einzelanwendung gegen das breite Spektrum der natürlich vorkommenden holzverfärbenden Pilze und Schimmelpilze unbefriedigend, da ihr Wirkungsspektrum lückenhaft ist.

Es wurde nun überraschenderweise gefunden, daß neue Wirkstoffkombinationen aus mindestens einem Phenolderivat, wie z.B.
- Tribromphenol
- Tetrachlorphenol
- 3-Methyl-4-chlorphenol
- Dichlorophen
- o-Phenylphenol
- m-Phenylphenol
- p-Phenylphenol
- 2-Benzyl-4-chlorophenol
oder deren Metallsalze, ganz besonders bevorzugt das o-Phenylphenol, und mindestens einem Iodpropargyl-Derivat der Formel (I)

JC≡C-CH₂-O-CO-NH-R (I)

in welcher
- R: für geradkettiges oder verzweigtes Alkyl mit 1 bis 6 Kohlenstoffatomen, für Cycloalkyl mit 3 bis 6 Kohlenstoffatomen oder für Aryl, bevorzugt Phenyl, steht,
eine besonders breite und hohe Wirksamkeit verbunden mit geringen Anwendungskonzentrationen gegen holzverfärbende und holzzerstörende Pilze und Schimmelpilze aufweisen.

Insbesondere war nicht zu erwarten, daß die Iodpropargyl-Derivate mit den sauer reagierenden Phenolderivaten Mischungen bilden, die längere Zeit ohne Zersetzung stabil sind.

Als Beispiele für Iodpropargylderivate seien vorzugsweise genannt:
3-Iod-2-propinyl-n-butylcarbamat (IPBC)
3-Iod-2-propinyl-n-hexylcarbamat
3-Iod-2-propinyl-cyclohexylcarbamat
3-Iod-2-propinyl-phenylcarbamat,
ganz besonders bevorzugt ist das
3-Iod-2-propinyl-n-butylcarbamat (IPBC).

Ganz besonders hervorzuheben ist die Kombination aus o-Phenylphenol und IPBC.

Die Phenol-Derivate können nicht nur in Form von freien Säuren, sondern - wie schon erwähnt - in Form ihrer Metallsalze vorliegen. Als Metalle kommen vorzugsweise Metalle der I. Hauptgruppe des Periodensystems, wie z.B. Lithium, Natrium oder Kalium, in Frage.

Die Gewichtsverhältnisse der Wirkstoffe in den Wirkstoffkombinationen können in relativ großen Bereichen variiert werden.

Die Mischungen enthalten die Phenol-Komponente von 0,1 bis 99,9 %, der Rest zu 100 % ist die Iodpropargylverbindung.

Das Mischungsverhältnis Phenol-Komponente zu Iodpropargylverbindung ist vorzugsweise 75:1 bis 1:1, besonders bevorzugt 50:1 bis 5:1.

Die erfindungsgemäßen Wirkstoffkombinationen weisen eine starke Wirkung auf Mikroorganismen auf; sie sind vor allem wirksam gegen Schimmelpilze und holzverfärbende und holzzerstörende Pilze und können deshalb zum Schutz von Schnittholz eingesetzt werden.

Die neuen Wirkstoffkombinationen können in Form von Konzentraten sowie den daraus bereiteten Anwendungsformen wie Lösungen, Suspensionen, Emulsionen oder Pasten angewendet werden.

Die Anwendung zum Schutz des Holzes kann z.B. je nach Gefährdung des Holzes oder je nach den gegebenen technischen Möglichkeiten erfolgen
a) durch Besprühen des Holzes mit Lösungen oder Emulsionen
b) durch Tauchen des Holzes in Lösungen oder Emulsionen
c) durch Streichen des Holzes mit Lösungen oder Emulsionen
Die Menge der eingesetzten Wirkstoffkombinationen ist von der Art und dem Vorkommen der Mikroorganismen, der Keimzahl und von dem Medium abhängig. Die optimale Einsatzmenge kann bei der Anwendung jeweils durch Testreihen ermittelt werden. Im allgemeinen ist es jedoch ausreichend, 0,01 bis 2 g/m², vorzugsweise 0,05 bis 1 g/m² der Wirkstoffgemische, bezogen auf die Oberfläche des zu schützenden Schnittholzes, einzusetzen.

Die genannten Formulierungen können in an sich bekannter Weise hergestellt werden, z.B. durch Lösen der Wirkstoffe in einem Lösungs- bzw. Verdünnungsmittel und gegebenenfalls weiteren Hilfsmitteln wie Emulgatoren oder durch Emulsion in Wasser von emulgatorhaltigen organischen Lösungen.

Als Lösungs- bzw. Verdünnungsmittel kommen organisch-chemische Lösungsmittel oder Lösungsmittelgemische und/oder ein polares organisches Lösungsmittel oder Lösungsmittelgemisch und/oder ein öliges bzw. ölartiges organisch-chemisches Lösungsmittel oder Lösungsmittelgemisch und/oder Wasser mit mindestens einem Emulgator und/oder Netzmittel in Frage.

Als unpolare organisch-chemische Lösemittel oder Lösemittelgemische werden schwerflüchtige, ölige oder ölartige Lösungsmittel wie Mineralöle oder mineralölhaltige Lösungsmittelgemische, Testbenzin, Petroleum und/oder Alkylbenzol eingesetzt.

Als polare organisch-chemische Lösemittel werden Hydroxy-, Ester-, Ether- oder Ketogruppen enthaltende Lösemittel oder Lösemittelgemische, vorzugsweise Dibutylphthalat oder Benzoesäurebutylester, eingesetzt.

Zusätzlich können auch Esteralkohole, wie z.B. 2,2,4-Trimethylpentandiolmonoisobutyrat und/oder andere Esteralkohole ähnlicher Struktur verwendet werden.

Als Emulgatoren oder Emulgatorgemische gelangen nichtionogene Emulgatoren wie z.B. Alkylpolyglykolether oder Alkylarylpolyglykolether oder anionische Emulgatoren wie z.B. Alkylbenzolsulfonsäuren oder Salze der Alkylbenzolsulfonsäuren oder Alkylcarbonsäuren wie Stearinsäure oder Rizinolsäure oder deren Alkali- oder Ammoniumsalze oder Mischungen aus verschiedenen nichtionischen und/oder anionischen Emulgatoren zum Einsatz. Bevorzugt werden Mischungen von Dodecylbenzolsulfonsäuresalzen mit Rizinolsäuresalzen verwendet.

Zu den erfindungsgemäßen Wirkstoffkombinationen, den daraus herstellbaren Mitteln, Konzentraten oder ganz allgemein Formulierungen können weitere Fungizide, Insektizide oder andere Wirkstoffe zur Vergrößerung des Wirkungsspektrums oder Erzielung besonderer Effekte zugesetzt werden. Besonders günstige Mischungspartner sind z.B. die folgenden Verbindungen:
Sulfenamide wie Dichlorfluanid, Tolylfluanid, Folpet, Fluorfolpet;
Benzimidazole wie Carbendazim, Benomyl, Fuberidazole, Thiabendazole oder deren Salze;
Thiocyanate wie Thiocyanatomethylthiobenzothiazol, Methylenbisthiocyanat;
quartäre Ammoniumverbindungen wie Benzyldimethyltetradecylammoniumchlorid, Benzyldimethyldodecylammoniumchlorid, Didecyldimethylammoniumchlorid;
Morpholinderivate wie Tridemorph, Fenpropimorph, Falimorph;
Azole wie Triadimefon, Triadimenol, Bitertanol, Tebuconazole, Propiconazole, Azaconazole, Hexaconazole, Prochloraz;
Iodderivate wie Diiodmethyl-p-tolylsulfon, 3-Iod-2-propinylalkohol, 4-Chlorophenyl-3-iodpropargylformal, 3-Brom-2,3-diiod-2-propenylethylcarbonat, 2,3,3-Triiodallylalkohol, 3-Brom-2,3-diiod-propargylalkohol;
Bromderivate wie Bronopol;
Isothiazolinone wie N-Methylisothiazolin-3-on, 5-Chloro-N-methyl-isothiazolin-3-on, 4,5-Dichloro-N-octylisothiazolin-3-on, N-Octyl-isothiazolin-3-on;
Benzisothiazolinone, Cyclopentenisothiazolinone;
Pyridine wie 1-Hydroxy-2-pyridinthion (und ihre Na-, Fe-, Mn-, Zn-Salze), Tetrachlor-4-methylsulfonylpyridin;
Metallseifen wie Zinn-, Kupfer-, Zinknaphthenat, -octoat, -2-ethylhexanoat, -oleat, -phosphat, -benzoat;
Oxide wie Tributylzinnoxid, Cu₂O, CuO, ZnO;
Dialkyldithiocarbamate wie Na- und Zn-Salze von Dialkyldithiocarbamaten, Tetramethylthiuramdisulfid;
Nitrile wie 2,4,5,6-Tetrachlorisophthalodinitril;
Benzthiazole wie 2-Mercaptobenzothiazol;
Chinoline wie 8-Hydroxychinolin;
Borverbindungen wie Borsäure, Borsäureester, Borax;
Formaldehydabspaltende Verbindungen wie Benzylalkohol-mono(poly)-hemiformal, Oxazolidine, Hexahydro-S-triazine, N-Methylolchloracetamid;
Tris-N-(cyclohexyldiazeniumdioxy)-aluminium, N-(Cyclohexyldiazeniumdioxy)-tributylzinn bzw. K-Salze, Bis-N-(cyclohexyldiazeniumdioxy)-kupfer.

Carbonsäurederivate wie Benzoesäure, Sorbinsäure, 2-Ethylhexansäure sowie deren Alkali- und Erdalkalisalze.

Als Insektizide werden bevorzugt zugesetzt:
Phosphorsäureester wie Azinphos-ethyl, Azinphos-methyl, 1-(4-Chlorphenyl)-4-(O-ethyl,S-propyl)phosphoryloxypyrazol, Chlorpyrifos, Coumaphos, Demeton, Demeton-S-methyl, Diazinon, Dichlorvos, Dimethoate, Ethoprophos, Etrimfos, Fenitrothion, Penthion, Heptenophos, Parathion, Parathion-methyl, Phosalone, Phoxim, Pirimiphos-ethyl, Pirimiphos-methyl, Profenofos, Prothiofos, Sulfprofos, Triazophos und Trichlorphon;
Carbamate wie Aldicarb, Bendiocarb, 2-(1-Methylpropyl)phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb;
Pyrethroide wie Allethrin, Alphamethrin, Bioresmethrin, Byfenthrin, Cycloprothrin, Cyfluthrin, Decamethrin, Cyhalothrin, Cypermethrin, Deltamethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Nitroimine und Nitromethylene wie 1-[(6-Chlor-3-pyridinyl)-methyl]-4,5-dihydro-N-nitro-1H-imidazol-2-amin (Imidacloprid).

Neue Mittel oder Konzentrate enthalten die erfindungsgemäßen Wirkstoffgemische in einer Konzentration von 0,01 bis 80 Gew.-%, daneben gegebenenfalls 0,001 bis 10 Gew.-% eines geeigneten weiteren Fungizids oder Insektizids wie oben genannt sowie mehr als 20 Gew.-% eines Gemisches aus Lösungsmittel/Verdünnungsmittel, gegebenenfalls Emulgatoren und gegebenenfalls Wasser.

Die auf diese Weise hergestellten erfindungsgemäßen Mittel, Konzentrate und Formulierungen zum Schutz von Schnittholz zeigen bei Gegenwart eines Insektizids Wirksamkeit nicht nur gegen die vorbenannten Pilze, sondern auch gegen holzzerstörende Insekten.

Das erfindungsgemäße Konzentrat zum Schutz von Schnittholz gegen holzverfärbende und holzzerstörende Pilze und Schimmelpilze enthält vorteilhaft
20 bis 60 Gew.-%, vorzugsweise
30 bis 60 Gew.-%, besonders bevorzugt
50 bis 55 Gew.-% des Gemisches aus
A) ortho-Phenylphenol und
B) Iodpropargylbutylcarbamat
im Verhältnis
75 : 1 bis 1 : 1, vorzugsweise
50 : 1 bis 5 : 1,
sowie
0 bis 15 Gew.-%, vorzugsweise
2 bis 10 Gew.-% Esteralkohole,
5 bis 25 Gew.-%, vorzugsweise
10 bis 15 Gew.-% anionische Emulgatoren oder Emulgatorgemische und
0 bis 75 Gew.-%, vorzugsweise
20 bis 38 Gew.-% Lösemittel, vorzugsweise Phthalsäure- oder Benzoesäureester.

Das erfindungsgemäße Mittel (anwendungsfertige Mittel) zum Schutz von Schnittholz gegen holzverfärbende Pilze enthält nach einer vorteilhaften Ausführungsform
0,02 bis 5,0 Gew.-%, vorzugsweise
0,10 bis 2,5 Gew.-% eines Konzentrates aus
20 bis 60 Gew.-%, vorzugsweise
30 bis 60 Gew.-%, besonders bevorzugt
50 bis 55 Gew.-% des Gemisches aus
A) ortho-Phenylphenol
B) Iodpropargylbutylcarbamat
im Verhältnis
75 : 1 bis 1 : 1, vorzugsweise
50 : 1 bis 5 : 1, sowie
0 bis 15 Gew.-%, vorzugsweise
2 bis 10 Gew.-% Esteralkohole,
5 bis 25 Gew.-%, vorzugsweise
10 bis 15 Gew.-% anionische Emulgatoren oder Emulgatorgemische und
0 bis 75 Gew.-%, vorzugsweise
20 bis 38 Gew.-% Lösemittel, vorzugsweise Phthalsäure- oder Benzoesäureester, verdünnt mit mehr als
95,0 Gew.-%, vorzugsweise mehr als
97,5 Gew.-% Wasser und/oder Lösungsmittel/Verdünnungsmittel, vorzugsweise Wasser.

Das Schnittholz wird mit dem erfindungsgemäßen Mittel oder Konzentrat derart behandelt, daß auf der Holzoberfläche
0,01 bis 2 g/m², vorzugsweise
0,05 bis 1 g/m² der Wirkstoffkombination angebracht werden.

### Beispiele

### Beispiel 1

300 g o-Phenylphenol werden mit
10 g Iodpropargylbutylcarbamat in
410 g Benzoesäurebutylester gemischt, mit
30 g 2,2,4-Trimethylpentandiolmonoisobutyrat und
250 g eines Emulgatorgemisches bestehend aus
25 Gew.-% Rizinolsäure-Na-Salz,
25 Gew.-% Dodecylbenzolsulfonsäure-Na-Salz,
17 Gew.-% Wasser und
33 Gew.-% Butanol
versetzt und bei Raumtemperatur 4 h gerührt. Es entstehen 1000 g einer klaren, hellbraunen Lösung, Stockpunkt < -10°C.

### Beispiel 2

300 g o-Phenylphenol werden mit
30 g Iodpropargylbutylcarbamat in
390 g Benzoesäurebutylester gemischt, mit
30 g 2,2,4-Trimethylpentandiolmonoisobutyrat und
250 g eines Emulgatorgemisches bestehend aus
25 Gew.-% Rizinolsäure-Na-Salz,
25 Gew.-% Dodecylbenzolsulfonsäure-Na-Salz,
17 Gew.-% Wasser und
33 Gew.-% Butanol
versetzt und bei Raumtemperatur 4 h gerührt. Es entstehen 1000 g einer klaren, hellbraunen Lösung, Stockpunkt < -10°C.

### Beispiel 3

500 g o-Phenylphenol werden mit
50 g Iodpropargylbutylcarbamat in
170 g Benzoesäurebutylester gemischt, mit
30 g 2,2,4-Trimethylpentandiolmonoisobutyrat und
250 g eines Emulgatorgemisches bestehend aus
25 Gew.-% Rizinolsäure-Na-Salz,
25 Gew.-% Dodecylbenzolsulfonsäure-Na-Salz,
17 Gew.-% Wasser und
33 Gew.-% Butanol
versetzt und bei Raumtemperatur 4 h gerührt. Es entstehen 1000 g einer klaren, hellbraunen Lösung, Stockpunkt <10°C.

### Beispiel 4

300 g o-Phenylphenol werden mit
30 g Iodpropargylbutylcarbamat in
390 g Benzoesäurebutylester gemischt, mit
30 g 2,2,4-Trimethylpentandiolmonoisobutyrat und
250 g eines Emulgatorgemisches bestehend aus
25 Gew.-% Rizinolsäure-Na-Salz,
25 Gew.-% Dodecylbenzolsulfonsäure-Na-Salz,
17 Gew.-% Wasser und
33 Gew.-% Butanol
versetzt und bei Raumtemperatur 4 h gerührt. Es entstehen 1000 g einer klaren, hellbraunen Lösung, Stockpunkt <5°C.

### Beispiel 5

1 g des Konzentrates aus Beispiel 1 werden mit
999 g Leitungswasser (^{∼}20°dH) 5 min gemischt; es entsteht eine milchige Emulsion, die über Wochen ohne Zersetzung stabil bleibt.

### Beispiel 6

15 g des Konzentrates aus Beispiel 4 werden mit
985 g Leitungswasser (^{∼}20°dH) 5 min gemischt; es entsteht eine milchige Emulsion, die über Wochen stabil bleibt.
Diese Emulsion ist nicht korrosiv gegen Stahl im Vergleich zu Wasser.

### Beispiel 7 (Vergleichsbeispiel):

300 g o-Phenylphenol werden mit
420 g Benzoesäurebutylester gemischt, mit
30 g 2,2,4-Irimethylpentandiolmonoisobutyrat und
250 g eines Emulgatorgemisches bestehend aus
25 Gew.-% Rizinolsäure-Na-Salz,
25 Gew.-% Dodecylbenzolsulfonsäure-Na-Salz,
17 Gew.-% Wasser und
33 Gew.-% Butanol
versetzt und bei Raumtemperatur 4 h gerührt. Es entstehen 1000 g einer klaren, hellbraunen Lösung, Stockpunkt <5°C.

### Beispiel 8

Chips aus Kiefernsplintholz mit einer Größe von etwa 4 cm x 4 cm x 0,1 cm werden autoklaviert und mit steriler 1 %iger Malzextraktlösung unter Vakuum (10 min, 40 mbar) imprägniert.

Danach werden die Chips 1 min in Fungizid-Emulsion, hergestellt aus den Konzentraten der Beispiele 1, 2 und 7 nach der in Beispiel 5 bzw. 6 genannten Vorgehensweise, getaucht; folgende Verdünnungen in Leitungswasser wurden gewählt:
Aus Konzentrat des Beispiels 1: 0,1; 0,2; 0,5; 1,0; 1,5 Gew.-%
Aus Konzentrat des Beispiels 2: 0,1; 0,2; 0,5; 1,0; 1,5 Gew.-%
Aus Konzentrat des Beispiels 7: 1,0; 1,5; 2,0; 2,5; 3,0 Gew.-%
Nach 24 h Lagerung werden die imprägnierten und mit Fungizid-Emulsion behandelten Holzchips mit jeweils 2 ml Sporensuspension einer der folgenden Mischimpfen kontaminiert und bei Raumtemperatur in geschlossenen Petri-Schalen 14 Tage bebrütet:
- Mischimpfe A:: Aureobasidium pullulans
Sclerophoma pityophila
- Mischimpfe B:: Trichoderma pseudokoningii
Gliocladium virens
Aspergillus niger
Ceratocystis pilifera
Phialophora fastigiata
Penicillium sp.

Nach den 14 Tagen werden die Chips abgemustert; die folgenden Zahlenwerte geben die Konzentrat-Gehalte in Gew.-% in den Emulsionen an, bei denen kein Pilzwachstum mehr beobachtet wird:

| | Mischimpfe | |
|---|---|---|
| | A | B |
| Konzentrat aus Bsp. 1 | >0,1 - >0,2 | >0,2 - >0,5 |
| Konzentrat aus Bsp. 2 | ^{∼}0,1 | ^{∼}0,2 |
| Konzentrat aus Bsp. 7 | ^{∼}3,0 | >2,0 - <2,5 |

## Patentansprüche

1. Mikrobizide Mittel, gekennzeichnet durch einen Gehalt an einer Wirkstoffkombination bestehend aus mindestens einem Phenol-Derivat oder deren Metallsalze und einem Iodpropargyl-Derivat der Formel (I)
JC≡C-CH₂-O-CO-NH-R (I)
in welcher
R für geradkettiges oder verzweigtes Alkyl mit 1 bis 6 Kohlenstoffatomen, für Cycloalkyl mit 3 bis 6 Kohlenstoffatomen oder für Aryl steht.

2. Mikrobizide Mittel nach Anspruch 1, gekennzeichnet durch einen Gehalt an einer Wirkstoffkombination bestehend aus ortho-Phenylphenol und IPBC.

3. Mittel zum Schutz von Schnittholz gegen holzverfärbende und holzzerstörende Pilze und Schimmelpilze nach Anspruch 2, dadurch gekennzeichnet, daß es 20 bis 60 Gew.-% des Gemisches aus
A) ortho-Phenylphenol und
B) Iodpropargylbutylcarbamat
im Verhältnis
75 : 1 bis 1 : 1,
sowie
0 bis 15 Gew.-% Esteralkohole
5 bis 25 Gew.-% anionische Emulgatoren oder
Emulgatorgemische und
0 bis 75 Gew.-% Lösemittel enthält.

4. Mittel zum Schutz von Schnittholz gegen holzverfärbende Pilze nach Anspruch 2, dadurch gekennzeichnet, daß das (anwendungsfertige) Mittel 0,02 bis 5,0 Gew.-% eines Konzentrates aus 20 bis 60 Gew.-% des Gemisches aus
A) ortho-Phenylphenol
B) Iodpropargylbutylcarbamat
im Verhältnis
75 : 1 bis 1 : 1 sowie
0 bis 15 Gew.-% Esteralkohole,
5 bis 25 Gew.-% anionische Emulgatoren oder
Emulgatorgemische und
0 bis 75 Gew.-% Lösemittel,
verdünnt mit mehr als
95,0 Gew.-% Wasser und/oder Lösungsmittel/Verdünnungsmittel, enthält.

5. Mittel nach einem oder mehreren der Ansprüche 1 bis 4, dadurch gekennzeichnet, daß als Lösemittel polare organisch-chemische Hydroxy-, Ether-, Ester- oder Ketogruppen enthaltende Lösemittel oder Lösemittelgemische, vorzugsweise Phthalsäure- oder Benzoesäureester, eingesetzt werden.

6. Mittel oder Konzentrat nach einem oder mehreren der Ansprüche 1 bis 4, dadurch gekennzeichnet, daß als anionische Emulgatoren Alkylbenzolsulfonate und/oder Alkylcarboxylate, vorzugsweise Dodecylbenzolsulfonate und Rizinolsäuresalze, eingesetzt werden.

7. Verfahren zum Schutz von Schnittholz gegen holzverfärbende und holzzerstörende Pilze und Schimmelpilze, dadurch gekennzeichnet, daß auf die Holzoberfläche 0,01 bis 2 g/m² der Wirkstoffkombination nach Anspruch 1 aufgebracht werden.
